**(19)**

Europäisches Patentamt

European Patent Office

Office européen des brevets

**(11)** **EP 1 341 319 A1**

**(12)** **EUROPEAN PATENT APPLICATION**

**(43)** Date of publication:
**03.09.2003 Bulletin 2003/36**

**(51)** Int Cl.⁷: $H04B\ 7/06$

**(21)** Application number: **02251201.6**

**(22)** Date of filing: **21.02.2002**

| | |
|---|---|
| **(84)** Designated Contracting States: **AT BE CH CY DE DK ES FI FR GB GR IE IT LI LU MC NL PT SE TR** Designated Extension States: **AL LT LV MK RO SI** | **(72)** Inventor: **Karimi, Hamid Reza** **Swindon, Wiltshire SN5 5BJ (GB)** |
| **(71)** Applicant: **LUCENT TECHNOLOGIES INC.** **Murray Hill, New Jersey 07974-0636 (US)** | **(74)** Representative: **Sarup, David Alexander** **Lucent Technologies NS UK Limted,** **5 Mornington Road** **Woodford Green, Essex IG8 OTU (GB)** |

**(54)** **A method of processing data sequences and a corresponding base station comprising a plurality of transmission antennas**

**(57)** A method is provided of processing a number K of data sequences, each sequence being of N symbols, for transmission each to an intended one of a corresponding number K of user terminals by a base station of a time division duplex TDD telecommunications network. The base station comprising a plurality of transmission antennas. The method comprises spreading by a spreading factor Q each of the user data sequences using respective spreading codes, applying a matrix (P) to the data so as to effect a predistortion operation on the data, applying transmission diversity weightings (D) to the data provided from application of the matrix for predistortion, to set powers for transmission from respective antennas so as to enhance likelihood of reception of each data sequence by its intended user terminal.

In a first aspect the matrix (P) is square having dimensions KQN by KQN. In a second aspect the matrix P is applied to the data so as to effect predistortion before the user data sequences are spread.

EP 1 341 319 A1

Printed by Jouve, 75001 PARIS (FR)

**Description**

**Technical Field**

The present invention relates to a method of processing a number K of data sequences, each sequence being of N symbols, for transmission each to an intended one of a corresponding number K of user terminals by a base station of a time division duplex TDD telecommunications network, the base station comprising a plurality of transmission antennas. The present invention also relates to a corresponding base station.

**Background of the Invention**

The base station to mobile user terminal (i.e. downlink) radio performance of the UMTS (Universal Mobile Telecommunication System) terrestrial radio access time division duplex UTRA-TDD air-interface can be improved over that which can be achieved by a conventional Rake detector through the employment of multi-user detection techniques at the mobile user terminal. This, however, comes at the expense of increasing computational complexity at the user terminal, as well as the need for information on the spreading codes and the downlink transmission-diversity weights (or equivalently the midambles) used by other mobiles occupying the same time slot.
It is possible to eradicate the need for multi-user detection at a UMTS terrestrial radio access time division duplex UTRA-TDD mobile user terminal, through appropriate signal processing at a multi-antenna transmitter of a base station. This can be achieved via "joint pre-distortion" techniques which exploit the uplink/downlink channel reciprocity implicit in the UTRA-TDD air-interface (at low mobile speeds). Given knowledge of the downlink channels, joint pre-distortion results in complete joint interference cancellation and joint channel equalization. This is achieved with very little signal processing at the mobile user terminal.
One such joint pre-distortion scheme was proposed for IJMTS terrestrial radio access time division duplex UTRA-TDD standardisation in Third Generation Partnership Project 3GPP Technical Document Tdoc 3GPP TSGR1#6 (99)918, "Tx Diversity with Joint Predistortion", Source: Bosch, July 1999. Espoo-Finland. The approach involves the application of a matrix operator to the signals prior to transmission at the base station and allows a mobile equipped with only a simple correlator to achieve a performance comparable to multi-user detection. This approach is referred to as "Chip-Level Rectangular Joint Pre-distortion" (CR-JP) in this document. The term "chip-level" refers to the fact that the pre-distortion is applied to spread symbols. The term "rectangular" refers to the fact that the pre-distortion matrix is rectangular and increases the dimension of the spread symbols by a factor equal to the number of transmit antennas.
Conventional known transmission schemes, in particular involving multiuser detection, will now be described in more detail, followed by a description of the known chip-level rectangular joint predistortion (CR-JP) scheme.

Conventional UTRA-TDD Downlink transmission scheme

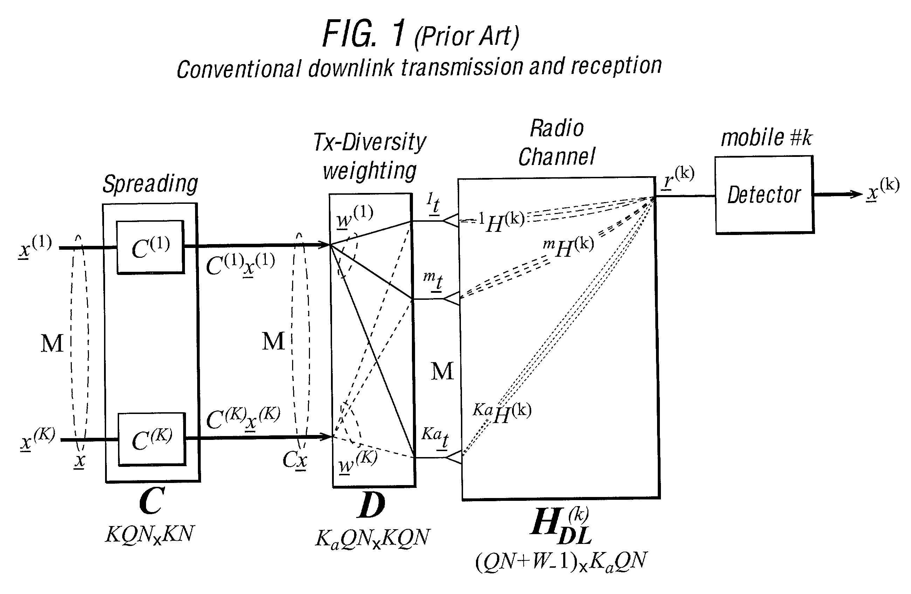

The known and conventional procedure for the transmission and reception of a UMTS terrestrial radio access time division duplex UTRA-TDD downlink time slot is as follows. A downlink time-slot typically consists of K synchronous co-channel signal bursts transmitted by the base station. Each of the K signal-bursts is destined for a single-antenna mobile and corresponds to a sequence of N complex symbols $\underline{x}^{(k)}$ spread by a factor Q via orthogonal spreading codes $\underline{c}^{(k)}$ k=1...K. Each burst is then scaled by an appropriate antenna-specific transmission Tx-diversity weight before transmission from the $K_a$ base station antennas so as to minimise the impact of e.g. multipath and fades. The signals propagate through dispersive multi-path radio channels (of length W chips) before arriving at each of the K mobiles being served in the time slot. This is illustrated below in Figure 1.
The signal $\underline{r}^{(k)}$ received at mobile k may be represented as

$$\underline{r}^{(k)} = A^{(k)}\underline{x} + \underline{n}^{(k)} \qquad (1)$$

where

$$A^{(k)} \underline{x} = \underbrace{\left[ {}^{1}H_{DL}^{(k)} \cdots {}^{K_a}H_{DL}^{(k)} \right]}_{\substack{H_{DL}^{(k)} \\ (QN+W-1) \times K_a QN}} \underbrace{\begin{bmatrix} {}^{1}w^{(1)}I & {}^{1}w^{(2)}I & \cdots & {}^{1}w^{(K)}I \\ {}^{2}w^{(1)}I & {}^{2}w^{(2)}I & \cdots & {}^{2}w^{(K)}I \\ \vdots & \vdots & \vdots & \vdots \\ {}^{K_a}w^{(1)}I & {}^{K_a}w^{(2)}I & \cdots & {}^{K_a}w^{(K)}I \end{bmatrix}}_{\substack{D \\ K_a QN \times KQN}} \underbrace{\begin{bmatrix} C^{(1)} & 0 & \cdots & 0 \\ 0 & C^{(2)} & \cdots & 0 \\ \vdots & \vdots & & \vdots \\ 0 & 0 & \cdots & C^{(K)} \end{bmatrix}}_{\substack{C \\ KQN \times KN}} \underbrace{\begin{bmatrix} \underline{x}^{(1)} \\ \underline{x}^{(2)} \\ \vdots \\ \underline{x}^{(K)} \end{bmatrix}}_{\substack{\underline{x} \\ KN \times 1}} \quad (2)$$

and

$\underline{x}^{(k)} \in C^{N \times 1}$      Sequence of $N$ complex symbols for mobile $k$.

$\underline{C}^{(k)} \in C^{QN \times N}$      Spreading matrix for mobile $k$.

$C \in C^{KQN \times KN}$      rank: $KN$ Multi-user spreading matrix.

$m_w^{(k)} \in C^{1 \times k}$      Tx-diversity weight for user $k$ at antenna $m$.

$I \in R^{QN \times QN}$      Identity matrix.

$D \in C^{K_a QN \times KQN}$      rank: $min\{K_a, K\}$ $QN$ Tx-diversity matrix.

$^{m}H^{(k)} \in C^{(QN+W-1) \times QN}$      rank: $QN$ Channel convolution matrix from antenna-$m$ to mobile $k$.

$H_{DL}^{(k)} \in C^{(QN+W-1) \times K_a QN}$      rank: $min\{QN+W-1, K_a ON\}$ Multi-antenna channel matrix to mobile $k$.

$A^{(k)} \in C^{(QN+W-1) \times KN}$      rank: $KN$ System matrix for mobile $k$.

$\underline{r}^{(k)} \in C^{(QN+W-1) \times 1}$      Signal received at mobile $k$.

$\underline{n}^{(k)} \in C^{(QN+W-1) \times 1}$      Inter-cell interference and thermal noise at mobile $k$.

($\in$ denotes, of course, takes the diminsions of.)

The transmit-diversity weights, $^{m}w^{(k)}$ $m = 1...K_a$, are calculated as a function of the downlink channel estimates in order to maximize the received signal power at the $k^{th}$ mobile according to the following criterion from 3GPP Technical Specification TS 25.224 v.3.2.0, "Physical Layer Procedures (TDD)", (Release 1999):

$$\underline{w}^{(k)} = \arg\max_{\underline{w}} \left\{ \frac{\sum_{i=1}^{W} \left\| \sum_{m=1}^{K_a} {}^{m}w^{(k)} {}^{m}h_{i,DL}^{(k)} \right\|^2}{\sum_{m=1}^{K_a} \left| {}^{m}w^{(k)} \right|^2} \right\} = \arg\max_{\underline{w}} \left\{ \frac{\underline{w}^{(k)H} Z_{DL}^{(k)H} Z_{DL}^{(k)} \underline{w}^{(k)}}{\underline{w}^{(k)H} \underline{w}^{(k)}} \right\} \quad (3)$$

where

$^{m}\underline{h}_{DL}^{(k)} \in C^{W \times 1}$      Downlink channel from the base station antenna $m$ to the mobile $k$.

$\underline{w}^{(k)} = [{}^{1}w^{(k)} \cdots {}^{K_a}w^{(k)}]^T \in C^{K_a \times 1}$      Vector of weights for user $k$.

$\overline{Z}^{(k)}_{DL} = [{}^{1}\underline{h}^{(k)}_{DL} \cdots {}^{K_a}\underline{h}^{(k)}_{DL}] \in C^{W \times K_a}$      Matrix of downlink channel vectors for mobile $k$.

The solution to the above Rayleigh quotient maximization problem is the eigenvector corresponding to the largest eigenvalue of $Z^{(k)H}_{DL} Z^{(k)}_{UI}$. The above approach is commonly referred to as "TxAA" in 3GPP parlance.

As can be seen, in order to compute the transmission Tx-diversity weights, the base station requires access to all $K_a \times K$ downlink channels. In practice, UMTS terrestrial radio access time division duplex UTRA-TDD uplink/ downlink reciprocity at low mobile speeds can be exploited, and the corresponding uplink channel estimates can be substituted into Equation (3). For the purposes of this document, it is assumed that the base station has perfect knowledge of the downlink channels.

From equations (1) and (2), it can be seen that the signal at the $k^{th}$ mobile can be modelled as

$$\underline{r}^{(k)} = A^{(k)} \underline{x} + \underline{n}^{(k)} = H_{DL}^{(k)} DC\underline{x} + \underline{n}^{(k)} = \left[ A_1^{(k)} \; A_2^{(k)} \; \cdots \; A_K^{(k)} \right] \begin{bmatrix} \underline{x}^{(1)} \\ \underline{x}^{(2)} \\ \vdots \\ \underline{x}^{(K)} \end{bmatrix} + \underline{n}^{(k)} \quad (4)$$

and the relevant transmitted symbols $\underline{x}^{(k)}$ can be estimated according to a wide variety of detection schemes, a number of which are described next.

<u>Matched Filter (Rake)</u> - The pre-whitened matched filter estimator known from A. Klein, G.K. Kaleh, P.W. Baier, "Zero Forcing and Minimum Mean-Square-Error Equalization for Multiuser Detection in Code-Division Multiple-Access Channels", IEEE Trans. VT, Vol 45, No. 2, pp. 276-287, May 1996 may be written as

$$\hat{\underline{x}}^{(k)}_{Mk} = A_k^{(k)H} R_n^{-1} \underline{r}^{(k)} \tag{5}$$

where $\boldsymbol{R}_n = \mathrm{E}\{\underline{n}^{(k)}\underline{n}^{(k)H}\}$ is the correlation matrix of the inter-cell interference and noise. Note that the matched filter is a single-user detector in that it does not use the sub-matrices $\boldsymbol{A}_i^{(k)}$ $i{\neq}k$ which correspond to the contributions of $x^{(i)}$ $i{\neq}k$ to the received signal $r^{(k)}$; i.e. it treats other intra-cell users' contributions as unmodelled additive noise.

<u>Zero-Forcing Joint Detection</u> - The Zero Forcing Block Linear Equalizer (ZF-BLE) from the Klein paper mentioned above which is

$$\hat{\underline{x}}_{ZF} = \left\{ A^{(k)H} R_n^{-1} A^{(k)} \right\}^{-1} A^{(k)H} R_n^{-1} \underline{r}^{(k)} \tag{6}$$

jointly detects <u>all</u> user symbols by exploiting the full system matrix $\boldsymbol{A}^{(k)}$ to fully suppress multiple-access interference. Note that only the segment $\underline{x}^{(k)}$ of $\underline{x}$ needs to be computed. The detection may be performed by using Cholesky factorization, forward substitution and back substitution. If hard decisions are incorporated in the back substitution process, then the detector becomes a Zero Forcing Block Decision Feedback Equalizer (ZF-BDFE).

<u>MMSE Joint Detection</u> -The Minimum Mean Square Error Block Linear Equalizer (MMSE-BLE) from the Klein paper mentioned above which is

$$\hat{\underline{x}}_{MMSE} = \left\{ A^{(k)H} R_n^{-1} A^{(k)} + R_x^{-1} \right\}^{-1} A^{(k)H} R_n^{-1} \underline{r}^{(k)} \tag{7}$$

reduces noise enhancement at the expense of incomplete suppression of multiple-access interference, where $\mathrm{E}\{\underline{xx}^{IH}\}{=}\boldsymbol{R}_x{=}2\boldsymbol{I}_{NK}$. Only the segment $\underline{x}^{(k)}$ of $\underline{x}$ needs to be computed. The Decision Feedback variant (MMSE-BDFE) may again be readily derived by incorporating hard decisions in the back substitution process.

In addition to joint detection, other forms of multi-user detection such as serial and parallel interference cancellation (and variations thereof) are also possible. However, it is clear that any process of multi-user detection at the mobile has three key drawbacks:(1) the mobile requires knowledge of spreading codes used by other intra-cell mobiles, (2) the mobile requires knowledge of transmission Tx-diversity weights used by other intra-cell mobiles, and (3) in an effort to improve the quality of its data estimates, a mobile expends significant computational complexity in manipulating the system sub-matrices which identify the contributions of other intra-cell mobiles.

It was therefore important to investigate techniques which eradicate the need for multi-user detection at the mobile. One alternative to multi-user detection at the mobile is channel equalization, see for example A. Klein, "Data Detection Algorithms Specially Designed for the Downlink of CDMA Mobile Radio Systems", pp. 203 - 207, VTC-97, May 1997, Phoenix-USA, but this has significant drawbacks. Such an equalization process restores the orthogonality of the spreading codes at the receiver, thereby suppressing multiple-access interference; however, the deployment of transmission Tx-diversity at the base station eliminates the possibility of conventional channel equalization at the mobile, since different users' signals are scaled by different weights at a transmit antenna and subsequently will have experienced differing total propagation channels upon their arrival at a mobile. Consequently, joint channel equalization is necessary. Joint channel equalization at mobile $k$ may be written as $(\boldsymbol{B}^H\boldsymbol{B})^{-1}\boldsymbol{B}^H \underline{r}^{(k)}\boldsymbol{D}$, where $\boldsymbol{B}{=}\boldsymbol{H}_{DL}^{(k)}\boldsymbol{D}$. Unfortunately, $\boldsymbol{B}$ can not be guaranteed to be full-rank. For example, if $K_a{<}K$ or $QN+W{-}1{<}KQN$, then $\boldsymbol{B}$ would be rank-deficient and even joint channel equalization would not be possible.

Chip-Level Rectangular Joint Pre-Distortion (Cr-Jp)

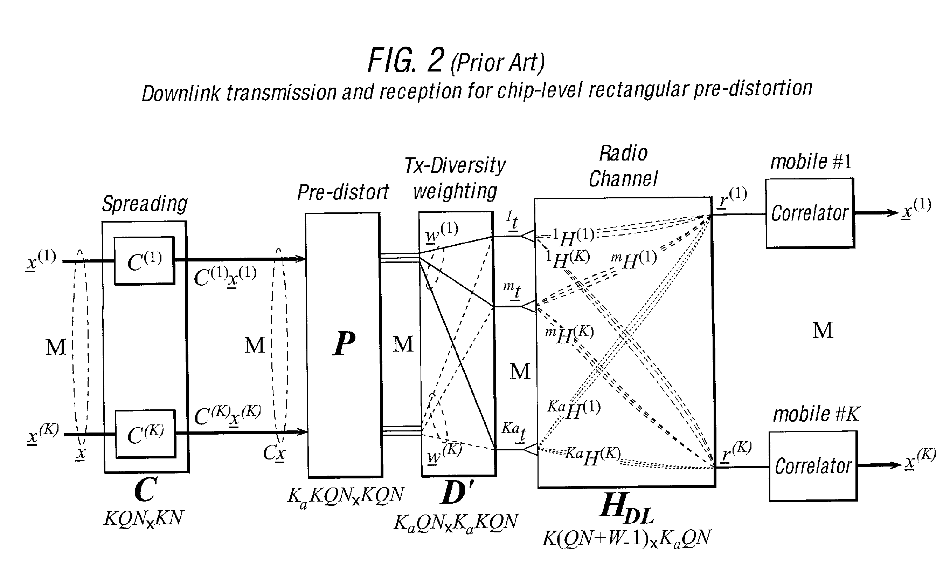

The known strategy of predistortion, namely "Chip-Level Rectangular Joint Pre-distortion" (CR-JP) proposed by Bosch in 1998 is to choose a "rectangular" pre-distortion matrix, such that each of the $K$ input spread sequences are transformed into $K_a$ pre-distorted sequences. Each pre-distorted sequence is then scaled by an antenna-specific Tx-diversity weight prior to transmission from a specific antenna. This scheme is depicted in Figure 2. It might be expected that the increased dimensionality of **P** would somehow result in improved performance.

The signals received at the *K* mobiles may be formally described as

$$
\begin{bmatrix} \underline{r}^{(1)} \\ \vdots \\ \underline{r}^{(K)} \end{bmatrix} = \underbrace{\begin{bmatrix} {}^{1}\boldsymbol{H}_{DL}^{(1)} & \cdots & {}^{K_a}\boldsymbol{H}_{DL}^{(1)} \\ \vdots & & \vdots \\ {}^{1}\boldsymbol{H}_{DL}^{(K)} & \cdots & {}^{K_a}\boldsymbol{H}_{DL}^{(K)} \end{bmatrix}}_{\substack{\boldsymbol{H}_{DL} \\ K(QN+W-1)\times K_a QN}} \underbrace{\begin{bmatrix} {}^{1}w^{(1)}\boldsymbol{I} & \cdots & {}^{1}w^{(K)}\boldsymbol{I} & \cdots & 0 & \cdots & 0 \\ 0 & \cdots & 0 & \cdots & \vdots & & \vdots \\ \vdots & & \vdots & & 0 & \cdots & 0 \\ 0 & \cdots & 0 & \cdots & {}^{K_a}w^{(1)}\boldsymbol{I} & \cdots & {}^{K_a}w^{(K)}\boldsymbol{I} \end{bmatrix}}_{\substack{\boldsymbol{D'} \\ K_aQN\times K_aKQN}} \boldsymbol{P} \underbrace{\begin{bmatrix} \boldsymbol{C}^{(1)} & 0 & 0 \\ 0 & \ddots & 0 \\ 0 & 0 & \boldsymbol{C}^{(K)} \end{bmatrix}}_{\substack{\boldsymbol{C} \\ KQN\times KN}} \underbrace{\begin{bmatrix} \underline{x}^{(1)} \\ \vdots \\ \underline{x}^{(K)} \end{bmatrix}}_{\substack{\underline{x} \\ KN\times 1}} + \underbrace{\begin{bmatrix} \underline{n}^{(1)} \\ \vdots \\ \underline{n}^{(K)} \end{bmatrix}}_{\underline{n}}
$$

$$\text{Equation}(8)$$

where

$\underline{x}^{(k)} \in C^{N\times 1}$     Sequence of *N* complex symbols for mobile *k*.

$\boldsymbol{C}^{(k)} \in C^{QN\times N}$     Spreading matrix for mobile *k*.

$\boldsymbol{C} \in C^{KQN\times KN}$     *rank*: *KN* Multi-user spreading matrix.

$\boldsymbol{P} \in C^{KaKQN\times KQN}$     *rank*: *KQN* Rectangular pre-distortion matrix.

${}^{m}w^{(k)} \in C^{1\times 1}$     Tx-diversity weight for user *k* at antenna *m*.

$\boldsymbol{I} \in R^{QN\times QN}$     Identity matrix

$\boldsymbol{D'} \in C^{KaQN\times KaKQN}$ *rank*: $K_aQN$ Augmented Tx-diversity matrix.

${}^{m}\boldsymbol{H}^{(k)} \in C^{(QN+W-1)\times QN}$     *rank*: *QN* Channel convolution matrix from antenna-*m* to mobile *k*.

$\boldsymbol{H}_{DL} \in C^{K(QN+W-1)\times KaQN}$     *rank*: *min*{*K*(*QN*+*W*-1), $K_aQN$} Augmented channel matrix.

$\underline{r}^{(k)} \in C^{(QN+W-1)\times 1}$     Signal received at mobile *k*.

$\underline{n}^{(k)} \in C^{(QN+W-1)\times 1}$     Inter-cell interference and thermal noise at mobile *k*.

The pre-distortion **P** can be designed such that a simple 1-finger correlation at the *k*th mobile is sufficient to extract the relevant user symbol estimates from the received signal. In other words

$$
\underline{\hat{x}} = \begin{bmatrix} \underline{\hat{x}}^{(1)} \\ \underline{\hat{x}}^{(2)} \\ \vdots \\ \underline{\hat{x}}^{(K)} \end{bmatrix} = \begin{bmatrix} \boldsymbol{R}^{(1)H} & 0 & \cdots & 0 \\ 0 & \boldsymbol{R}^{(2)H} & \cdots & 0 \\ \vdots & \vdots & & \vdots \\ 0 & 0 & \cdots & \boldsymbol{R}^{(K)H} \end{bmatrix} \begin{bmatrix} \underline{r}^{(1)} \\ \underline{r}^{(2)} \\ \vdots \\ \underline{r}^{(K)} \end{bmatrix} = \boldsymbol{R}^{H}\boldsymbol{H}_{DL}\boldsymbol{D'}\,\boldsymbol{PC}\underline{x} + \boldsymbol{R}^{H}\underline{n} = \boldsymbol{V'}\,\boldsymbol{PC}\underline{x} + \boldsymbol{R}^{H}\underline{n} \quad (9)
$$

The pre-distortion can be made to achieve complete interference suppression and equalization by setting

$$
\underline{x} = \boldsymbol{V'}\,\boldsymbol{PC}\underline{x} \Rightarrow \boldsymbol{P} = \boldsymbol{V'}^{H}(\boldsymbol{V'V'}^{H})^{-1}\,\underline{x}\frac{\underline{x}^{H}\boldsymbol{C}^{H}}{\|\boldsymbol{C}\underline{x}\|^{2}} \tag{10}
$$

Given that $\boldsymbol{V'} = \boldsymbol{R}^{H}\boldsymbol{H}_{DL}\boldsymbol{D'} \in C^{KN\times KaKQN}$, the pre-distortion matrix **P** exists if and only if **V'** has full row-rank. It can be readily seen that this is indeed always the case, since

$$
rank\{\boldsymbol{V'}\} = \min\left\{ KN, K(QN+W-1), K_aQN \right\} = KN \tag{11}
$$

given that $K \leq Q$, $1 \leq K_a$, $1 \leq W$ and $1 \leq Q$.

## Summary of the Invention

The present invention in a first aspect provides a method of processing a number K of data sequences, each sequence being of N symbols, for transmission each to an intended one of a corresponding number K of user terminals by a base station of a time division duplex TDD telecommunications network, the base station comprising a plurality of transmission antennas,

the method comprising spreading by a spreading factor Q each of the user data sequences using respective spreading codes,

applying a matrix (P) to the data so as to effect a predistortion operation on the data,

applying transmission diversity weightings (D) to the data provided from application of the matrix for predistortion, to set powers for transmission from respective antennas so as to enhance likelihood of reception of each data sequence by its intended user terminal,

characterised in that the matrix (P) is square having dimensions KQN by KQN.

Preferably the matrix (P) is selected so as to enable a single-finger Rake receiver in a user terminal to extract estimates of received symbols.

Preferably the matrix (P) is selected such that with the $k^{th}$ mobile receiving the signal $\underline{r}^{(k)}$, a single-finger correlation process $R^{(k)H}\underline{r}^{(k)}$ is undertaken where

$$\mathbf{R}^{(k)} = \begin{bmatrix} & 0_{(W-1)\times 1} & & \\ \underline{c}^{(k)} & 0 & \cdots & 0 \\ 0 & \underline{c}^{(k)} & \cdots & 0 \\ \vdots & \vdots & & \vdots \\ 0 & 0 & \cdots & \underline{c}^{(k)} \end{bmatrix}$$

where $\underline{c}^{(k)}$ is the spreading code applied to the data sequence for user k, W is the length of the channel impulse response in units of chips and $\underline{r}^{(k)}$ is the signal received at mobile k.

Furthermore preferably the matrix (P) is selected such that

$$P = V^H (VV^H)^{-1} \underline{x} \frac{\underline{x}^H C^H}{\|C\underline{x}\|^2}$$

where C is the multiuser spreading matrix, and $\underline{x}$ is the sequence of N complex symbols for mobile k, and where $V=R^H H_{DL} D$ where $H_{DL}$ is the multiantenna multiuser channel matrix including $^m$H Channel convolution components from each antenna-m to each mobile k, D is the transmission -diversity matrix of Tx-diversity weights for each user k at each antenna m.

Furthermore, the time division duplex telecommunications network is preferably a universal mobile telecommunications system UMTS telecommunications network.

Furthermore, the spreading codes are preferably orthogonal spreading codes.

The present invention in its first aspect also provides a base station of a time division duplex TDD telecommunications network, the base station comprising a plurality of transmission antennas, the base station comprising a processor to process a number K of data sequences, each sequence being of N symbols, for transmission each to an intended one of a corresponding number K of user terminals,

the processor comprising a spreader, a predistorter, and a transmission-diversity stage,

the spreader being operative to spread by a spreading factor Q each of the user data sequences using respective spreading codes,

the predistorter being operative to apply a matrix (P) to the data so as to effect a predistortion operation on the data,

the transmission diversity stage being operative to apply transmission diversity weightings (D) to the data provided from the predistorter to set powers for transmission from respective antennas so as to enhance likelihood of reception of each data sequence by its intended user terminal,

characterised in that the matrix (P) is square having dimensions KQN by KQN.

The present invention in its second aspect provides a method of processing a number K of data sequences, each sequence being of N symbols, for transmission each to an intended one of a corresponding number K of user terminals by a base station of a time division duplex TDD telecommunications network, the base station comprising a plurality of transmission antennas,

the method comprising spreading by a spreading factor Q each of the user data sequences using respective spreading codes,

applying a matrix (P) to the data so as to effect a predistortion operation on the data,

applying transmission diversity weightings (D) to the data provided from application of the matrix for predistortion, to set powers for transmission from respective antennas so as to enhance likelihood of reception of each data sequence by its intended user terminal,

<u>characterised in that</u> the matrix P is applied to the data so as to effect predistortion before the user data sequences are spread.

Preferably the matrix (P) is square having dimensions KN by KN. Preferably the matrix (P) is selected so as to enable a single-finger Rake receiver in a user terminal to extract estimates of received symbols. Preferably the matrix (P) is selected such that

$$\hat{\underline{x}} = \begin{bmatrix} \hat{\underline{x}}^{(1)} \\ \hat{\underline{x}}^{(2)} \\ \vdots \\ \hat{\underline{x}}^{(K)} \end{bmatrix} = \begin{bmatrix} \mathbf{R}^{(1)H} & 0 & \cdots & 0 \\ 0 & \mathbf{R}^{(2)H} & \cdots & 0 \\ \vdots & \vdots & & \vdots \\ 0 & 0 & \cdots & \mathbf{R}^{(K)H} \end{bmatrix} \begin{bmatrix} \underline{r}^{(1)} \\ \underline{r}^{(2)} \\ \vdots \\ \underline{r}^{(K)} \end{bmatrix} = \mathbf{R}^{H} \mathbf{H}_{DL} \mathbf{DC} \, \mathbf{P} \underline{x} + \mathbf{R}^{H} \underline{n}$$

where $\underline{x}^{(k)}$ is the sequence of $N$ complex symbols for mobile $k$, the single finger correlation process is $\mathbf{R}^{H}\underline{r}^{(k)}$ where $r^{(k)}$ is the signal received at mobile $k$, $\boldsymbol{H}_{DL}$ is the multiantenna channel matrix including $^{m}\boldsymbol{H}^{(k)}$ channel convolution components from antenna-$m$ to mobile $k$, D is the transmission-diversity matrix, $C$ is the multi-user spreading matrix including spreading codes for mobile k, $n^{(k)}$ is the inter-cell interference and thermal noise at mobile $k$. Furthermore preferably the distortion matrix P is set to be

$$P = U^{-1}$$

where

$$x(k) = UP\,\underline{x} + \mathbf{R}^{H}\underline{n}$$

Alternatively preferably the matrix (P) is rectangular having dimensions kaKN by KN where ka is the number of transmission antennas.

Furthermore, the time division duplex telecommunications network is preferably a universal mobile telecommunications system UMTS telecommunications network.

Furthermore, the spreading codes are preferably orthogonal spreading codes.

The present invention in its second aspect also provides a base station of a time division duplex TDD telecommunications network, the base station comprising a plurality of transmission antennas, the base station comprising a processor to process a number K of data sequences, each sequence being of N symbols for transmission each to an intended one of a corresponding number K of user terminals,

the processor comprising a spreader, a predistorter and a transmission-diversity stage,

the spreader being operative to spread by a spreading factor Q each of the user data sequences using respective spreading codes,

the predistorter being operative to apply a matrix (P) to the data so as to effect a predistortion operation on the data,

the transmission diversity stage being operative to apply transmission diversity weightings (D) to the data provided from application of the matrix for predistortion, to set powers for transmission from respective antennas so as to enhance likelihood of reception of each data sequence by its intended user terminal,

<u>characterised in that</u> the matrix P is applied to the data so as to effect predistortion before the user data sequences are spread.

The invention in its first and/or second aspects in its preferred embodiments is a means to reduce computational complexity, albeit at the expense of marginal degradation in performance.

The preferred techniques eradicate the need for multi-user detection (MUD) at the mobile through appropriate signal processing at the base station transmitter. The preferred techniques are "joint pre-distortion" (JP) techniques which exploit the uplink/downlink channel reciprocity which is implicit in the UMTS terrestrial radio access time division duplex UTRA-TDD air-interface at low mobile speeds. These techniques are applicable to any air-interface which incorporates a time-division duplex (TDD) scheme. Specific examples include UTRA-TDD (both 3.84 and 1.28 Mchips/s versions) as well as the Chinese TD-SCDMA standard.

Size, cost and complexity of mobile user terminals are important factors in determining the success of 3G (and beyond) wireless radio systems. In the pursuit of ever improving qualities of service, mobiles need to perform increasingly sophisticated signal processing operations which are accompanied by high levels of computational complexity. The present invention in its preferred embodiments provides mechanisms by which the mobile complexity can be reduced significantly so through appropriate signal processing at the base station, with little or no degradation in the quality of service.

### Brief Description of the Drawings

Preferred embodiments of the present invention will now be described by way of example and with reference to the drawings, in which:

Figure 1 is a diagrammatic illustration of a conventional known transmission scheme involviing multiuser detection (prior art),

Figure 2 is a diagrammatic illustration of a known predistortion scheme involving chip-level rectangular predistortion (prior art),

Figure 3 is a diagrammatic illustration of a chip-level square predistortion scheme,

Figure 4 is a diagrammatic illustration of a symbol -level square predistortion scheme,

Figure 5 is a diagrammatic illustration of a symbol-level rectangular predistortion scheme, and

Figure 6 is a set of results shown in graph form of expected bit error rate versus bit energy/noise energy for various schemes (including prior art schemes for comparison).

### Detailed Description

Three techniques are investigated. These are categorized according to whether pre-distortion is performed at chip or symbol level and whether the pre-distortion matrix is square or rectangular:

Chip-Level Square Joint Pre-distortion (CS-JP)
Symbol-Level Square Joint Pre-distortion (SS-JP)
Symbol-Level Rectangular Joint Pre-distortion (SR-JP)

Chip-Level Square Joint Pre-Distortion (Cs-Jp)

In this scheme, the pre-distortion matrix $P$ is "square" and consequently, it does not alter the dimensionality of its input vector. In other words, $K$ spread sequences were transformed into $K$ pre-distorted sequences.

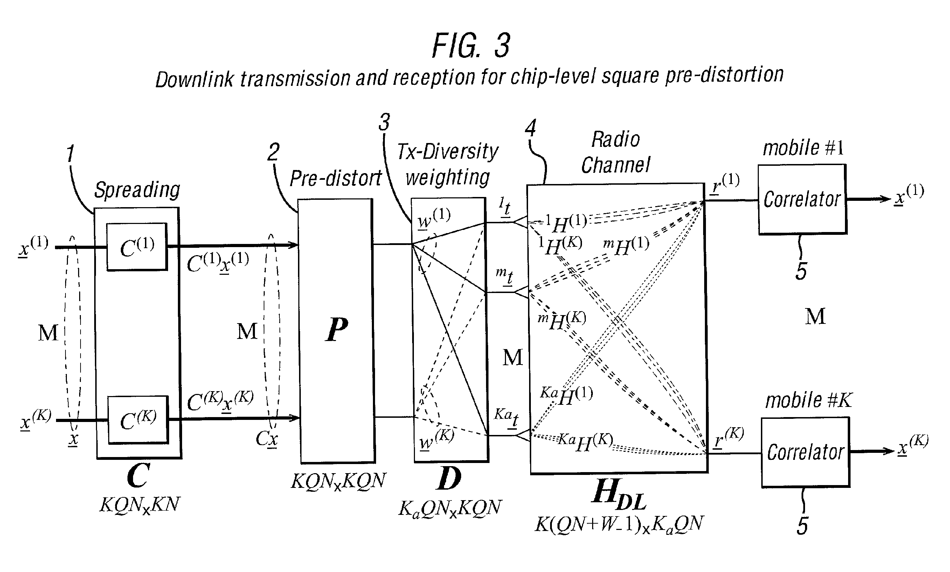

This scheme for the transmission and reception of a UMTS terrestrial radio access time division duplex UTRA-TDD downlink time slot is depicted in Figure 3. A total of K user data sequences (of N symbols each) are (1) spread as usual via orthogonal codes of length Q. The K spread sequences (of length QN chips each) are then (2) applied to a square matrix P, resulting in K "pre-distorted" sequences (again of length QN chips each). Each sequence is then scaled (3) by an appropriate antenna-specific transmission Tx-diversity weight as in the conventional known technique described earlier prior to transmission from the $K_a$ antennas. The signals propagate (4) through dispersive multi-path radio channels (W chips) before arriving at each of the K mobiles (5) being served in the time slot. The joint pre-distortion matrix P is designed such that at each mobile a simple correlator is sufficient to recover the relevant user data, i.e. the pre-distortion process performs both joint interference cancellation and joint channel equalization. This eliminates the need for joint-detection block-equalization at the mobile.

Given the above model, the signals received at the K mobiles may be formally described as

$$\begin{bmatrix} \underline{r}^{(1)} \\ \vdots \\ \underline{r}^{(K)} \end{bmatrix} = \underbrace{\begin{bmatrix} {}^1H_{DI}^{(1)} & \cdots & {}^{K_a}H_{DI}^{(1)} \\ \vdots & & \vdots \\ {}^1H_{DI}^{(K)} & \cdots & {}^{K_a}H_{DI.}^{(K)} \end{bmatrix}}_{\substack{H_{DI} \\ K(QN+W-1)\times K_aQN}} \underbrace{\begin{bmatrix} {}^1w^{(1)}I & \cdots & {}^1w^{(K)}I \\ \vdots & & \vdots \\ {}^{K_a}w^{(1)}I & \cdots & {}^{K_a}w^{(K)}I \end{bmatrix}}_{\substack{D \\ K_aQN\times KQN}} P \underbrace{\begin{bmatrix} C^{(1)} & 0 & 0 \\ 0 & \ddots & 0 \\ 0 & 0 & C^{(K)} \end{bmatrix}}_{\substack{C \\ KQN\times KN}} \underbrace{\begin{bmatrix} \underline{x}^{(1)} \\ \vdots \\ \underline{x}^{(K)} \end{bmatrix}}_{\substack{\underline{x} \\ KN\times 1}} + \underbrace{\begin{bmatrix} \underline{n}^{(1)} \\ \vdots \\ \underline{n}^{(K)} \end{bmatrix}}_{\underline{n}} \quad (12)$$

where

$\underline{x}^{(k)} \in C^{N\times 1}$     Sequence of N complex symbols for mobile k.

$\bar{C}^{(k)} \in C^{QN\times N}$     Spreading matrix for mobile k.

$C \in C^{KQN\times KN}$     rank: KN Multi-user spreading matrix.

$P \in C^{KQN\times KQN}$     rank: KQN Square pre-distortion matrix.

${}^mw^{(k)} \in C^{1\times 1}$     Tx-diversity weight for user k at antenna m.

$I \in R^{QN\times QN}$     Identity matrix.

$D \in C^{KaQN\times KQN}$     rank: $\min\{K_a, K\}QN$ Tx-diversity matrix.

${}^mH^{(k)} \in C^{(QN+W-1)\times QN}$     rank: QN Channel convolution matrix from antenna-m to mobile k.

$H_{DL} \in C^{K(QN+W-1)\times KaQN}$     rank: $\min\{K(QN+W-1), K_aQN\}$ Augmented channel matrix.

$\underline{r}^{(k)} \in C^{(QN+W-1)\times 1}$     Signal received at mobile k.

$\underline{n}^{(k)} \in C^{(QN+W-1)\times 1}$     Inter-cell interference and thermal noise at mobile k.

With the $k^{th}$ mobile having received the signal $r^{(k)}$, a 1-finger correlation process may be written as $R^{(k)H}\underline{r}^{(k)}$ where

$$R^{(k)} = \begin{bmatrix} & & 0_{(W-1)\times N} & & \\ \underline{c}^{(k)} & 0 & \cdots & 0 \\ 0 & \underline{c}^{(k)} & \cdots & 0 \\ \vdots & \vdots & & \vdots \\ 0 & 0 & \cdots & \underline{c}^{(k)} \end{bmatrix} = \begin{bmatrix} 0_{(W-1)\times N} \\ \hline C^{(k)} \end{bmatrix} \in C^{(QN+W-1)\times N} \quad (13)$$

and $\underline{c}^{(k)} \in C^{Q\times 1}$ is the relevant spreading code. The zero sub-block within $R^{(k)}$ identifies the segment of the received signal over which correlation is not performed and represents the finger "timing" information at the receiver. It may be placed either before or after $\bar{C}^{(k)}$ with no effect on performance, since its influence is absorbed in the pre-equalization function of P.

The pre-distortion P can be designed such that a simple 1-finger correlation at the $k^{th}$ mobile is sufficient to extract the relevant user symbol estimates from the received signal. In other words

$$\hat{\underline{x}} = \begin{bmatrix} \hat{\underline{x}}^{(1)} \\ \hat{\underline{x}}^{(2)} \\ \vdots \\ \hat{\underline{x}}^{(K)} \end{bmatrix} = \begin{bmatrix} R^{(1)H} & 0 & \cdots & 0 \\ 0 & R^{(2)H} & \cdots & 0 \\ \vdots & \vdots & & \vdots \\ 0 & 0 & \cdots & R^{(K)H} \end{bmatrix} \begin{bmatrix} \underline{r}^{(1)} \\ \underline{r}^{(2)} \\ \vdots \\ \underline{r}^{(K)} \end{bmatrix} = R^H H_{DI} D PC\underline{x} + R^H \underline{n} = V PC\underline{x} + R^H \underline{n}$$

$$(14)$$

Note that rank $\{R^{(k)}\}=N$ and so rank $\{R\}=KN$.

The pre-distortion can be made to achieve complete interference suppression and equalisation by setting

$$\underline{x} = V' PC\underline{x} \Rightarrow P = V^H(VV^H)^{-1} \underline{x} \frac{\underline{x}^H C^H}{\|C\underline{x}\|^2} \quad (15)$$

Given that $V=R^H H_{DL} D \in C^{KN \times KQN}$, the pre-distortion matrix $P$ exists if and only if $V$ has full row-rank. It can be readily seen that this is indeed always the case, since

$$rank\{V\} = \min\left\{ KN, K(QN+W-1), K_a QN, KQN \right\} = KN \quad (16)$$

given that $K \leq Q$, $1 \leq K_a$, $1 \leq W$ and $1 \leq Q$.

It will be seen that the pre-distortion matrix is a function of:

(1) the downlink radio channels from each base station antenna to all active mobiles in the time slot,
(2) the Tx-diversity weights at each base station antenna for all active mobiles in the time slot,
(3) the spreading codes of all active mobiles in the time slot, and
(4) the symbols intended for all active mobiles in the time slot.

It will be seen that due to the fact that $V$ has $K_a$ times less columns than $V'$ of the CR- JP approach mentioned in the Background section, the computational complexity of CS-JP is less than that of CR-JP.

Symbol-Level Square Joint Pre-Distortion (Ss-Jp)

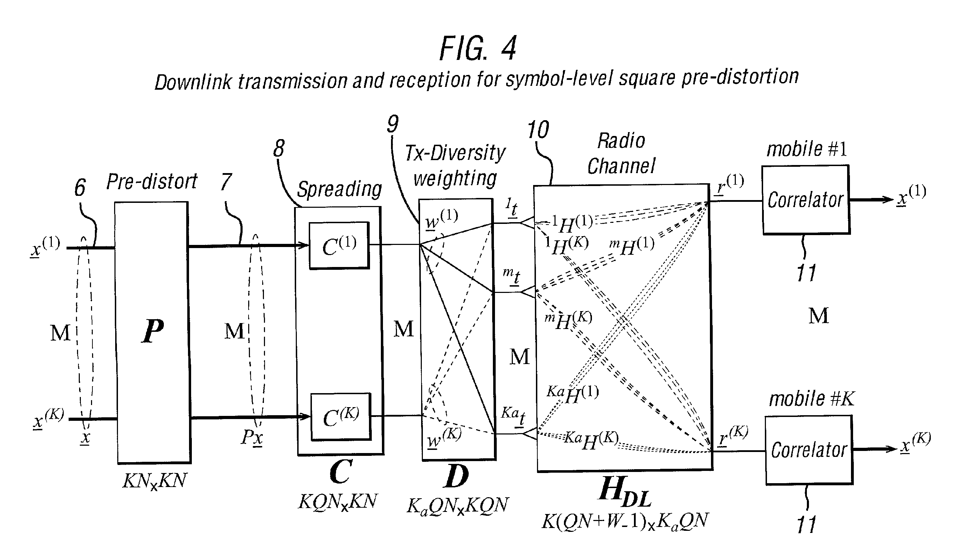

The previous scheme was based on the pre-distortion of spread sequences, i.e. pre-distortion was applied alter the spreading process. Here we consider pre-distortion of the actual user symbols. A total of $K$ user data sequences (of $N$ symbols each) arc applied (6) to a square matrix $P$, resulting in $K$ "pre-distorted" symbol sequences (7) (again, each of length $N$). The $K$ pre-distorted sequences are then spread (8) as usual via orthogonal codes of length $Q$. Each spread sequence is then scaled (9) by an antenna-specific Tx-diversity weight as described previously prior to transmission from the $K_a$ antennas. The signals propagate (10) through dispersive multipath radio channels ($W$ chips) before arriving at each of the $K$ mobiles (11) being served in the time slot. This is depicted in Figure 4. As before, the joint pre-distortion matrix $P$ may be designed such that at each mobile a simple correlator is sufficient to recover the relevant user data, i.e. the pre-distortion process performs both joint interference cancellation and joint channel equalization.

Given the above model, the signals received at the K mobiles may be formally described as

$$\begin{bmatrix} \underline{r}^{(1)} \\ \vdots \\ \underline{r}^{(K)} \end{bmatrix} = \underbrace{\begin{bmatrix} {}^1H_{DL}^{(1)} & \cdots & {}^{K_a}H_{DL}^{(1)} \\ \vdots & & \vdots \\ {}^1H_{DL}^{(K)} & \cdots & {}^{K_a}H_{DL}^{(K)} \end{bmatrix}}_{\substack{H_{DL} \\ K(QN+W-1)\times K_a QN}} \underbrace{\begin{bmatrix} {}^1w^{(1)}I & \cdots & {}^1w^{(K)}I \\ \vdots & & \vdots \\ {}^{K_a}w^{(1)}I & \cdots & {}^{K_a}w^{(K)}I \end{bmatrix}}_{\substack{D \\ K_a QN \times KQN}} \underbrace{\begin{bmatrix} C^{(1)} & 0 & 0 \\ 0 & \ddots & 0 \\ 0 & 0 & C^{(K)} \end{bmatrix}}_{\substack{C \\ KQN \times KN}} P \underbrace{\begin{bmatrix} \underline{x}^{(1)} \\ \vdots \\ \underline{x}^{(K)} \end{bmatrix}}_{\substack{\underline{x} \\ KN \times 1}} + \underbrace{\begin{bmatrix} \underline{n}^{(1)} \\ \vdots \\ \underline{n}^{(K)} \end{bmatrix}}_{\underline{n}} \quad (17)$$

$$\underbrace{\phantom{xxx}}_{\underline{r}}$$

Note the reduced dimensionality of $P$ and the reversed order of matrices $P$ and $C$ as compared to Eq. (12).

$\underline{x}^{(k)} \in C^{N \times 1}$        Sequence of $N$ complex symbols for mobile $k$.
$C^{(k)} \in C^{QN \times N}$        Spreading matrix for mobile $k$.
$C \in C^{KQN \times KN}$       *rank*: $KN$ Multi-user spreading matrix.
$P \in C^{KN \times KN}$       *rank*: $KN$ Square pre-distortion matrix.
$m_w^{(k)} \in C^{1 \times 1}$        Tx-diversity weight for user $k$ at antenna $m$.
$I \in R^{QN \times QN}$        Identity matrix.
$D \in C^{KaQN \times KQN}$       *rank*: $min\{K_a, K\}QN$ Tx-diversity matrix.
$mH^{(k)} \in C^{(QN+W-1) \times QN}$       *rank*: $QN$ Channel convolution matrix from antenna-$m$ to mobile $k$.
$H_{DI} \in C^{K(QN+W-1) \times KaQN}$       *rank*: $min\{K(QN+W-1), K_a QN\}$ Augmented channel matrix.
$r^{(k)} \in C^{(QN+W-1) \times 1}$       Signal received at mobile $k$.
$\underline{n}^{(k)} \in C^{(QNW-1) \times 1}$       Inter-cell interference and thermal noise at mobile k.

As before, the pre-distortion $P$ is designed such that a simple 1-finger correlation at the $k^{th}$ mobile is sufficient to extract the relevant user symbol estimates from the received signal. In other words

$$\underline{\hat{x}} = \begin{bmatrix} \underline{\hat{x}}^{(1)} \\ \underline{\hat{x}}^{(2)} \\ \vdots \\ \underline{\hat{x}}^{(k)} \end{bmatrix} = \begin{bmatrix} \boldsymbol{R}^{(1)H} & 0 & \cdots & 0 \\ 0 & \boldsymbol{R}^{(2)H} & \cdots & 0 \\ \vdots & \vdots & & \vdots \\ 0 & 0 & \cdots & \boldsymbol{R}^{(K)H} \end{bmatrix} \begin{bmatrix} \underline{r}^{(1)} \\ \underline{r}^{(2)} \\ \vdots \\ \underline{r}^{(K)} \end{bmatrix} = \boldsymbol{R}^{H} \boldsymbol{H}_{DL} \boldsymbol{DC} \, \boldsymbol{P} \underline{x} + \boldsymbol{R}^{H} \underline{n} = \boldsymbol{U} \boldsymbol{P} \underline{x} + \boldsymbol{R}^{H} \underline{n} \qquad (18)$$

The pre-distortion can be made to achieve *complete interference suppression* and *equalization* by setting

$$\underline{x} = \boldsymbol{UP}\underline{x} \Rightarrow \boldsymbol{P} = \boldsymbol{U}^{-1} \qquad (19)$$

Given that $\boldsymbol{U} = \boldsymbol{R}^{H}\boldsymbol{H}_{DL}\boldsymbol{DC} \in C^{KN \times KN}$, the pre-distortion matrix $\boldsymbol{P}$ exists if and only if $\boldsymbol{U}$ has full rank. It can be readily seen that this is indeed <u>always</u> the case, since

$$rank\{\boldsymbol{U}\} = \min\left\{ KN, K(QN + W - 1), K_a QN, KQN \right\} = KN \quad (20)$$

given that $K < Q$, $1 \leq K_a$, $1 \leq W$ and $1 \leq Q$.

It will be noted that unlike the case of chip-level pre-distortion, the symbol-level pre-distortion matrix does not exploit any of the available information regarding the user symbols *x*.

Symbol-Level Rectangular Joint Pre-Distortion (Sr-Jp)

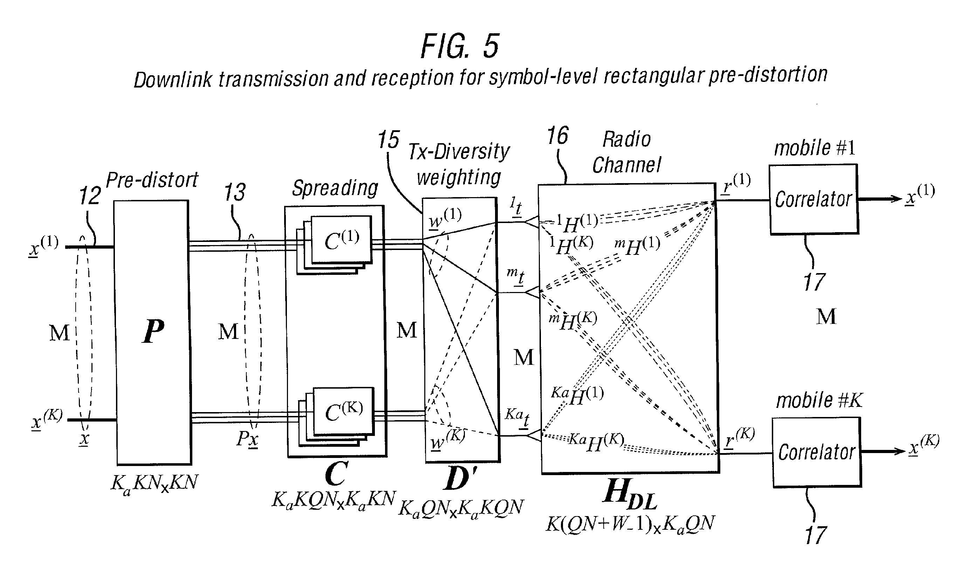

In the previous scheme, the pre-distortion matrix $\boldsymbol{P}$ was "square" and consequently, it did not alter the dimensionality of its input vector. In other words, *K* symbol sequences were transformed into *K* pre-distorted sequences. An alternative strategy is to choose a "rectangular" pre-distortion matrix, such that each of the *K* input symbol sequences (12) are transformed into $K_a$ pre-distorted symbol sequences (13). Each pre-distorted symbol sequence is then spread (14) by its relevant orthogonal user code, scaled (15) by an antenna-specific Tx-diversity weight as described previously prior to transmission (16) from antennas to mobiles (17). This scheme is depicted in Figure 5. It might be expected that the increased dimensionality of $\boldsymbol{P}$ would somehow result in improved performance.

The signals received at the *K* mobiles may be formally described as

$$\underbrace{\begin{bmatrix} \underline{r}^{(1)} \\ \vdots \\ \underline{r}^{(K)} \end{bmatrix}}_{\underline{r}} = \underbrace{\begin{bmatrix} {}^{1}\boldsymbol{H}_{DL}^{(1)} & \cdots & {}^{K_a}\boldsymbol{H}_{DL}^{(1)} \\ \vdots & & \vdots \\ {}^{1}\boldsymbol{H}_{DL}^{(K)} & \cdots & {}^{K_a}\boldsymbol{H}_{DL}^{(K)} \end{bmatrix}}_{\substack{\boldsymbol{H}_{DL} \\ K(QN+W-1) \times K_a QN}} \underbrace{\begin{bmatrix} {}^{1}w^{(1)}\boldsymbol{I} & \cdots & {}^{1}w^{(K)}\boldsymbol{I} & \cdots & 0 & \cdots & 0 \\ 0 & \cdots & 0 & \cdots & \vdots & & \vdots \\ \vdots & & \vdots & & 0 & \cdots & 0 \\ 0 & \cdots & 0 & \cdots & {}^{K_a}w^{(1)}\boldsymbol{I} & \cdots & {}^{K_a}w^{(k)}\boldsymbol{I} \end{bmatrix}}_{\substack{\boldsymbol{D}' \\ K_a QN \times K_a KQN}} \underbrace{\begin{bmatrix} \boldsymbol{C} & 0 & 0 \\ 0 & \ddots & 0 \\ 0 & 0 & \boldsymbol{C} \end{bmatrix}}_{\substack{\boldsymbol{C}' \\ K_a KQN \times K_a KN}} \boldsymbol{P} \underbrace{\begin{bmatrix} \underline{x}^{(1)} \\ \vdots \\ \underline{x}^{(K)} \end{bmatrix}}_{\substack{\underline{x} \\ KN \times 1}} + \underbrace{\begin{bmatrix} \underline{n}^{(1)} \\ \vdots \\ \underline{n}^{(K)} \end{bmatrix}}_{\underline{n}}$$

$$(21)$$

where the "augmented" spreading matrix $\boldsymbol{C}'$ contains $K_a$ replicas of the basic spreading matrix $\boldsymbol{C}$.

$x^{(k)} \in C^{N \times 1}$      Sequence of N complex symbols for mobile k.

$\boldsymbol{P} \in C^{K_a k N \times KN}$      rank: KN Rectangular pre-distortion matrix.

$\boldsymbol{C} \in C^{KQN \times KN}$      rank: KN Multi-user spreading matrix.

$\boldsymbol{C}' \in C^{K_a KQN \times K_a KN}$      rank: $K_a KN$ Augmented spreading matrix.

${}^{m}w^{(k)} \in C^{1 \times 1}$      Tx-diversity weight for user k at antenna m.

$I \in R^{QNxQN}$      Identity matrix.

$D' \in C^{K_aQN \times K_aKQN}$      rank: $K_a QN$ Augmented Tx-diversity matrix.

$^m H^{(k)} \in C^{(QN+W-1) \times QN}$      rank: QN Channel convolution matrix from antenna-m to mobile k.

$H_{DL} \in C^{K(QN+W-1) \times K_aQN}$      rank: min{K(QN+W-1), $K_a$QN} Augmented channel matrix.

$r^{(k)} \in C^{(QN+W-1) \times 1}$      Signal received at mobile k.

$n^{(k)} \in C^{(QN+W-1) \times 1}$      Inter-cell interference and thermal noise at mobile k.

Once again, the pre-distortion **P** can be designed such that a simple 1-finger correlation at the kth mobile is sufficient to extract the relevant user symbol estimates from the received signal. In other words

$$\hat{\underline{x}} = \begin{bmatrix} \hat{\underline{x}}^{(1)} \\ \hat{\underline{x}}^{(2)} \\ \vdots \\ \hat{\underline{x}}^{(K)} \end{bmatrix} = \begin{bmatrix} \boldsymbol{R}^{(1)H} & 0 & \cdots & 0 \\ 0 & \boldsymbol{R}^{(2)H} & \cdots & 0 \\ \vdots & \vdots & & \vdots \\ 0 & 0 & \cdots & \boldsymbol{R}^{(K)H} \end{bmatrix} \begin{bmatrix} \underline{r}^{(1)} \\ \underline{r}^{(2)} \\ \vdots \\ \underline{r}^{(K)} \end{bmatrix} = \boldsymbol{R}^{H} \boldsymbol{H}_{DL} \boldsymbol{D}'\boldsymbol{C}' \, \boldsymbol{P}\underline{x} + \boldsymbol{R}^{H} \, \underline{n} = \boldsymbol{U}' \, \boldsymbol{P}\underline{x} + \boldsymbol{R}^{H} \, \underline{n}$$

$$(22)$$

The pre-distortion can be made to achieve *complete interference suppression* and *equalization* by setting

$$\underline{x} = \boldsymbol{U'P}\underline{x} \Rightarrow \boldsymbol{P} = \boldsymbol{U'}^{H}(\boldsymbol{U'U'}^{H})^{-1} \tag{23}$$

Given that $\boldsymbol{U'} = \boldsymbol{R}^{H}\boldsymbol{H}_{DL}\boldsymbol{D'C'} \in C^{KN \times K_aKN}$, the pre-distortion matrix **P** exists if and only if **U'** has full row-rank. It can be readily seen that this is indeed <u>always</u> the case, since

$$rank\{\boldsymbol{U'}\} = \min\left\{ KN, K(QN+W-1), K_a QN, K_a KN \right\} = KN \tag{24}$$

given that $K \leq Q$, $1 \leq K_a$, $1 \leq W$ and $1 \leq Q$.

It will be noted that due to the fact that U' has $K_a$ times as many columns as U, the computational complexity of SR-JP is greater than that of SS-JP. Also, due to the fact that V and V' have Q times as many columns as U and U' respectively, the computational complexity of symbol-level pre-distortion is less than that of chip-level pre-distortion.

Simulations

Simulations were used to compare the performances of the above predistortion techniques with those achievable via known Rake and joint detection (specifically MMSE-BLE) at the mobile. Tx-diversity (also known as TxAA) is deployed by the base station in all cases. The radio channels simulated are Rayleigh fading (spatially uncorrelated) and frequency selective. Perfect knowledge of the downlink radio channels is assumed both at the base station and the mobiles. The results indicated that, at least for the scenarios considered, CR-JP consistently outperforms the MMSE-BLE (and certainly the Rake) whenever the number of transmit antennas exceeds 1 ($K_a$>1). More interestingly, the lower-complexity variants CS-JP and SR-JP also consistently outperform the MMSE-BLE for increasing numbers of transmit antennas (e.g. 4 and 8 in the scenarios considered). SS-JP, which has the lowest computational complexity (fewest degrees of freedom), generally exhibits very poor performance at the BER range of interest (even compared to the Rake).

To explain in more detail, the simulation scenario involves *K* synchronous, co-channel intra-cell users occupying a time-slot. Spreading is via orthogonal Walsh codes with a spreading factor of *Q*=8. Scrambling is not performed. The symbols are 4-QAM {±1±*j*} modulated with a sequence length of *N*=1 per user. The base station has $K_a$ transmit antennas and employs downlink Tx-diversity (TxAA) in all cases. Perfect knowledge of the downlink channels is assumed both at the base station transmitter and mobile receiver. The radio channels consists of *W*=3 equipowered chip-spaced impulses. The tap amplitudes are independent complex Gaussian random variables of variance 1/3 each, corresponding to a Rayleigh fading frequency-selective propagation environment. The tap amplitudes are fixed for the duration of *N* symbols. Each mobile is equipped with only a single receive antenna. The radio channels from the base station antennas to the mobile antennas are all uncorrelated, i.e. no spatial channel models are used. Inter-cell interference and thermal noise are modelled as additive white Gaussian noise of power spectral density $N_o$, i.e. $\boldsymbol{R_n}=N_o\boldsymbol{I}$. Chip-level and symbol-level joint pre-distortion (both square and rectangular) at the base station are compared with Rake and MMSE-BLE (joint detection) at the mobile receiver.

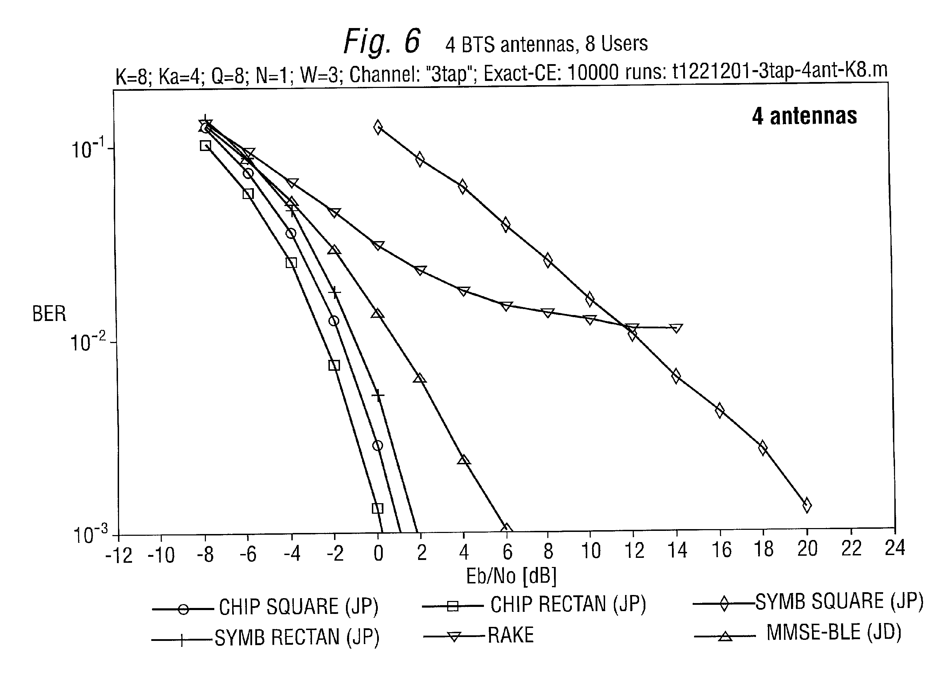

The results for $K=4$ and $K_a=8$ are presented in Figure 6. The BER values are averages over all K intra-cell mobiles.

It is important to note that, given perfect knowledge of the downlink channels, all the pre-distortion techniques presented here (see Equations 10, 15, 19, 23) achieve complete joint interference cancellation and joint channel equalization. Therefore, the only source of error in the detection process is due to inter-cell interference and thermal noise at the output of the single-finger Rake (as represented by the term $\boldsymbol{R}^H\underline{n}$). So in this sense, the performance of the pre-distortion techniques are all equivalent. However, different pre-distortion techniques result in different transmit powers. Consequently, the techniques achieve a given probability of bit error (BER) at a given noise spectral density $N_o$ with varying levels of average transmitted bit energy $E_b$, where for

$$\text{Chip-level Square Joint Pre-distortion (CS-JP): } E_b = \frac{T_s}{2KN}\left\|DPC\underline{x}\right\|^2 \qquad (25)$$

$$\text{Chip-level Rectangular Joint Pre-distortion (CR-JP): } E_b = \frac{T_s}{2KN}\left\|D'PC\underline{x}\right\|^2 \qquad (26)$$

$$\text{Symbol-level Square Joint Pre-distortion (SS-JP): } E_b = \frac{T_s}{2KN}\left\|DCP\underline{x}\right\|^2 \qquad (27)$$

$$\text{Symbol-level Rectangular Joint Pre-distortion (SR-JP): } E_b = \frac{T_s}{2KN}\left\|D'C'P\underline{x}\right\|^2 \qquad (28)$$

and $T_s$ is the sampling epoch (equal to the chip period in the simulations).
The following observations may be made from the simulation results in particular as shown in Figure 6.

The performance of Symbol-Level Square Pre-distortion (SS-JP) is consistently poorer than all other pre-distortion varieties due to excessive transmit power (caused by the few degrees of freedom available). Since pre-distortion techniques exhibit no BER floor (given perfect knowledge of the channel), the performance of SS-JP always exceeds that of the Rake at a sufficiently high signal to noise ratio (Eb/No). However, this occurs at raw BERs of interest (0.01 to 0.1) only when the system is heavily loaded (K is large) <u>and</u> few transmit antennas are available ($K_a$ is small), i.e. when the Rake hits an early BER floor.

Although Chip-Level Square Pre-distortion (CS-JP) is lower-complexity and lower performance than CR-JP, it can still out-performs joint detection when the number of transmit antennas exceeds 2 ($K_a=4$). This is particularly the case for the more critical medium- to heavily-loaded systems (e.g. $K=4,8$).

Symbol-Level Rectangular Pre-distortion (SR-JP) is also of a lower complexity and lower performance than CR-JP, yet its performance can approach or even exceed that of CS-JP for a sufficiently large number of transmit antennas (e.g. $K_a=4$).

Given Equations 10, 15, 19, 23, it may be inferred that pre-distortion techniques whose pre-distortion matrices $\boldsymbol{P}$ have the largest dimensionality also represent the largest available degrees of freedom, and consequently should exhibit the best performance. The simulation results certainly confirm this for the case of CR-JP (highest degrees of freedom: $K_aKQN{\times}KQN$) and the SS-JP (fewest degrees of freedom: $KN{\times}KN$). However, as seen above, the SR-JP (dimensions of $\boldsymbol{P}$: $K_aKN{\times}KN$) can sometimes outperform CS-JP (dimensions of $\boldsymbol{P}$: $KQN{\times}KQN$) despite its fewer degrees of freedom and lower computational complexity.

To recap, it will be seen that it is possible to eradicate the need for multi-user detection (MUD) at a UMTS terrestrial radio access time division duplex UTRA-TDD mobile, through appropriate signal processing at a multi-antenna base station transmitter. This can be achieved via *"joint pre-distortion"* techniques which exploit the uplink/downlink channel reciprocity implicit in the UMTS terrestrial radio access time division duplex UTRA-TDD air-interface (at low mobile speeds). Given perfect knowledge of the downlink channels, joint pre-distortion can result in complete joint interference cancellation <u>and</u> joint channel equalization.

A total of three such preferred techniques are proposed. These are categorized according to whether pre-distortion is performed at chip or symbol level and whether the pre-distortion matrix is square or rectangular:

Chip-Level Square Joint Pre-distortion (CS-JP),
Symbol-Level Square Joint Pre-distortion (SS-JP), and
Symbol-Level Rectangular Joint Pre-distortion (SR-JP).


**Claims**

1. A method of processing a number K of data sequences, each sequence being of N symbols, for transmission each to an intended one of a corresponding number K of user terminals by a base station of a time division duplex TDD telecommunications network, the base station comprising a plurality of transmission antennas,
   the method comprising spreading by a spreading factor Q each of the user data sequences using respective spreading codes,
   applying a matrix (P) to the data so as to effect a predistortion operation on the data,
   applying transmission diversity weightings (D) to the data provided from application of the matrix for predistortion, to set powers for transmission from respective antennas so as to enhance likelihood of reception of each data sequence by its intended user terminal,
   **characterised in that** the matrix (P) is square having dimensions KQN by KQN.

2. A method according to claim 1, in which the matrix (P) is selected so as to enable a single-finger Rake receiver in a user terminal to extract estimates of received symbols.

3. A method according to claim 2, in which the matrix (P) is selected such that with the $k^{th}$ mobile receiving the signal $\underline{r}^{(k)}$, a single-finger correlation process $R^{(k)H}\underline{r}^{(k)}$ is undertaken where

$$\mathbf{R}^{(k)} = \begin{bmatrix} & & 0_{(W-1)\times N} & \\ \hline \underline{c}^{(k)} & 0 & \cdots & 0 \\ 0 & \underline{c}^{(k)} & \cdots & 0 \\ \vdots & \vdots & & \vdots \\ 0 & 0 & \cdots & \underline{c}^{(k)} \end{bmatrix}$$

where $\underline{c}^{(k)}$ is the spreading code applied to the data sequence for user k,
W is the length of the channel impulse response in units of chips and
$\underline{r}^{(k)}$ is the signal received at mobile k.

4. A base station of a time division duplex TDD telecommunications network, the base station comprising a plurality of transmission antennas, the base station comprising a processor to process a number K of data sequences, each sequence being of N symbols, for transmission each to an intended one of a corresponding number K of user terminals,
   the processor comprising a spreader, a predistorter, and a transmission-diversity stage,
   the spreader being operative to spread by a spreading factor Q each of the user data sequences using respective spreading codes,
   the predistorter being operative to apply a matrix (P) to the data so as to effect a predistortion operation on the data,
   the transmission diversity stage being operative to apply transmission diversity weightings (D) to the data provided from the predistorter to set powers for transmission from respective antennas so as to enhance likelihood of reception of each data sequence by its intended user terminal,
   **characterised in that** the matrix (P) is square having dimensions KQN by KQN.

5. A method of processing a number K of data sequences, each sequence being of N symbols, for transmission each to an intended one of a corresponding number K of user terminals by a base station of a time division duplex telecommunications network, the base station comprising a plurality of transmission antennas,
   the method comprising spreading by a spreading factor Q each of the user data sequences using respective spreading codes,

applying a matrix (P) to the data so as to effect a predistortion operation on the data,

applying transmission diversity weightings (D) to the data provided from application of the matrix for predistortion, to set powers for transmission from respective antennas so as to enhance likelihood of reception of each data sequence by its intended user terminal,

**characterised in that** the matrix P is applied to the data so as to effect predistortion before the user data sequences are spread.

6. A method according to claim 5, in which the matrix (P) is square having dimensions KN by KN.

7. A method according to any of claim 6, in which the matrix (P) is selected so as to enable a single-finger Rake receiver in a user terminal to extract estimates of received symbols.

8. A method according to any of claim 7, in which the matrix (P) is selected such that

$$
\underline{\hat{x}} =
\begin{bmatrix} \hat{\underline{x}}^{(1)} \\ \hat{\underline{x}}^{(2)} \\ \vdots \\ \hat{\underline{x}}^{(K)} \end{bmatrix}
=
\begin{bmatrix}
\mathbf{R}^{(1)H} & 0 & \cdots & 0 \\
0 & \mathbf{R}^{(2)H} & \cdots & 0 \\
\vdots & \vdots & & \vdots \\
0 & 0 & \cdots & \mathbf{R}^{(K)H}
\end{bmatrix}
\begin{bmatrix} \underline{r}^{(1)} \\ \underline{r}^{(2)} \\ \vdots \\ \underline{r}^{(K)} \end{bmatrix}
= \mathbf{R}^{H} \mathbf{H}_{DL} \mathbf{D} \mathbf{C} \mathbf{P} \underline{x} + \mathbf{R}^{H} \underline{n}
$$

where $\underline{x}^{(k)}$ is the sequence of $N$ complex symbols for mobile $k$,

the single finger correlation process is $R^{H}\underline{r}^{(k)}$ where

$r^{(k)}$ is the signal received at mobile $k$.

$\boldsymbol{H}_{DL}$ is the multiantenna channel matrix including $^{m}\boldsymbol{H}^{(k)}$ channel convolution components from antenna-$m$ to mobile $k$,

D is the transmission -diversity matrix,

$\boldsymbol{C}$ is the multi-user spreading matrix including spreading codes for mobile k,

$\underline{n}^{(k)}$ is the inter-cell interference and thermal noise at mobile $k$.

9. A method according to claim 5, in which the matrix (P) is rectangular having dimensions kaKN by KN where ka is the number of transmission antennas.

10. A base station of a time division duplex telecommunications network, the base station comprising a plurality of transmission antennas, the base station comprising a processor to process a number K of data sequences, each sequence being of N symbols for transmission each to an intended one of a corresponding number K of user terminals.

the processor comprising a spreader, a predistorter and a transmission-diversity stage,

the spreader being operative to spread by a spreading factor Q each of the user data sequences using respective spreading codes,

the predistorter being operative to apply a matrix (P) to the data so as to effect a predistortion operation on the data,

the transmission diversity stage being operative to apply transmission diversity weightings (D) to the data provided from application of the matrix for predistortion, to set powers for transmission from respective antennas so as to enhance likelihood of reception of each data sequence by its intended user terminal,

**characterised in that** the matrix P is applied to the data so as to effect predistortion before the user data sequences arc spread.

# FIG. 1 (Prior Art)
## Conventional downlink transmission and reception

## FIG. 2 (Prior Art)
### Downlink transmission and reception for chip-level rectangular pre-distortion

# FIG. 3

### Downlink transmission and reception for chip-level square pre-distortion

EP 1 341 319 A1

EP 1 341 319 A1

## FIG. 4

### Downlink transmission and reception for symbol-level square pre-distortion

# FIG. 5

Downlink transmission and reception for symbol-level rectangular pre-distortion

EP 1 341 319 A1

*Fig. 6*   4 BTS antennas, 8 Users

K=8; Ka=4; Q=8; N=1; W=3; Channel: "3tap"; Exact-CE: 10000 runs: t1221201-3tap-4ant-K8.m

**4 antennas**

BER

Eb/No [dB]

—○— CHIP SQUARE (JP)      —□— CHIP RECTAN (JP)      —◇—SYMB SQUARE (JP)

—+—SYMB RECTAN (JP)      —▽—RAKE      —△— MMSE-BLE (JD)

EP 1 341 319 A1

European Patent
Office

**EUROPEAN SEARCH REPORT**

Application Number

EP 02 25 1201

| | | DOCUMENTS CONSIDERED TO BE RELEVANT | | |
|---|---|---|---|---|
| | Category | Citation of document with indication, where appropriate, of relevant passages | Relevant to claim | CLASSIFICATION OF THE APPLICATION (Int.Cl.7) |
| | A | WO 00 27046 A (BOSCH GMBH ROBERT ;KOWALEWSKI FRANK (DE)) 11 May 2000 (2000-05-11) * abstract * * page 13, line 25 - page 15, line 19 * * page 21, line 31 - page 26, line 15 * * figure 3 * --- | 1-4 | H04B7/06 |
| | A | F. KOWALEWSKI, P. MANGOLD: "Joint Predistortion Transmit Diversity" PROCEEDINGS OF GLOBAL TELECOMMUNICATIONS CONFERENCE,27 November 2000 (2000-11-27) - 1 December 2000 (2000-12-01), pages 245-249, XP002202957 San Francisco, USA * the whole document * --- | 1-4 | |
| | A,D | BOSCH: "TX Diversity with Joint Predistortion" TSG-RAN WORKING GROUP 1 MEETING NO. 6, TSGR1#6(99)918, 13 - 16 July 1999, XP002202958 Espoo, Finland * the whole document * ----- | 1-4 | TECHNICAL FIELDS SEARCHED (Int.Cl.7) H04B |

~~The present search report has been drawn up for all claims~~

| Place of search | Date of completion of the search | Examiner |
|---|---|---|
| MUNICH | 20 June 2002 | Helms, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

European Patent

Office

**Application Number**

EP 02 25 1201

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4

| European Patent Office | LACK OF UNITY OF INVENTION SHEET B | Application Number EP 02 25 1201 |
|---|---|---|

The Search Division considers that the present European patent application does not comply with the requirements of unity of invention and relates to several inventions or groups of inventions, namely:

1. Claims: 1-4

   Independent claims 1 and 4 relate to a method and a basestation, respectively, applying transmit diversity with joint predistortion in a time division duplex telecommunication system, characterized in that the predistortion matrix is square and has the dimensions KQN by KQN (K: number of user terminals; Q: spreading factor; N: number of symbols).

2. Claims: 5-10

   Independent claims 5 and 10 relate to a method and a basestation, respectively, applying transmit diversity with joint predistortion in a time division duplex telecommunication system, characterized in that the predistortion matrix is applied to the data before the user data sequences are spread.

The preambles of independent claims 1, 4, 5 and 10 are disclosed by document D ("TX diversity with Joint Predistortion", Bosch, TSGR1#6(99)918, July 13-16, 1999, Espoo, Finland).
Since the characterizing parts of claims 1 and 4 (group 1) differ from the characterizing parts of claims 5 and 10 (Group 2), a technical relationship involving one or more of the same or corresponding technical feature in the sense of Rule 30(1) EPC does not exist between the subject-matter of groups 1 and 2.

## ANNEX TO THE EUROPEAN SEARCH REPORT
## ON EUROPEAN PATENT APPLICATION NO.

EP 02 25 1201

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2002

| Patent document cited in search report | Publication date | Patent family member(s) | Publication date |
|---|---|---|---|
| WO 0027046 A | 11-05-2000 | DE 19850279 A1<br>WO 0027046 A1<br>EP 1125376 A1 | 11-05-2000<br>11-05-2000<br>22-08-2001 |